# NEUE EUROPÄISCHE PATENTSCHRIFT

(11) **EP 2 853 705 B2**
(45) Veröffentlichungstag und Bekanntmachung des Hinweises auf die Entscheidung über den Einspruch: **26.03.2025**
(45) Hinweis auf die Patenterteilung: 03.05.2017
(21) Anmeldenummer: 14182983.8
(22) Anmeldetag: 01.09.2014
(51) Int. Cl.: F01N 11/00, F01N 13/14, F01N 3/035, F01N 3/021, F01N 3/10, F01N 13/00

(54) **Abgasbehandlungseinrichtung**
Exhaust gas treatment device
Dispositif de traitement des gaz d'échappement

(30) Priorität: 27.09.2013 DE 102013219640
(43) Veröffentlichungstag der Anmeldung: 01.04.2015
(73) Patentinhaber: Purem GmbH, 66539 Neunkirchen (DE); Volvo Truck Corporation, 405 08 Göteborg (SE)
(72) Erfinder: Werni, Marcus, 71334 Waiblingen (DE); Ehrler, Simon, 73770 Denkendorf (DE); Karelin, Kirill, 73730 Esslingen (DE)
(74) Vertreter: BRP Renaud & Partner mbB Rechtsanwälte Patentanwälte Steuerberater

(56) Entgegenhaltungen:
- WO-A1-2006/021666
- WO-A1-2008/136203
- DE-A1- 10 324 165
- DE-A1- 102009 014 435
- DE-B3- 102012 207 960
- US-A1- 2005 056 008

## Beschreibung

Die Erfindung betrifft eine Abgasbehandlungseinrichtung und einen Verbrennungsmotor mit einer solchen Abgasbehandlungseinrichtung.

Verfahren zur mechanischen, katalytischen oder chemischen Reinigung der Verbrennungsabgase von Feuerungs-, Müllverbrennungs- oder anderen Industrieanlagen, Gasturbinen oder Motoren werden in der Abgastechnik unter dem Sammelbegriff der Abgasnachbehandlung zusammengefasst. Eine gemäß dem Stand der Technik durchgeführte Abgasnachbehandlung, optional in Kombination mit weiteren, die Gemischbildung oder die Verbrennung beeinflussenden Maßnahmen, mindert den Schadstoffausstoß konventioneller Verbrennungsmotoren deutlich.

Während etwa für Kraftfahrzeuge mit Ottomotoren sogenannte geregelte 3-Wege-Katalysatoren in zahlreichen Staaten seit Langem von der für die Teilnahme am öffentlichen Straßenverkehr gesetzlich vorgeschriebenen Mindestausstattung umfasst sind, sah der Stand der Technik für die Abgase vergleichbarer Dieselmotoren über viele Jahre nur eine unzureichende Abgasnachbehandlung vor, da das im Vergleich zu Ottomotoren höhere Luft-Kraftstoffverhältnissen dieser Motorvariante besondere funktionale Anforderungen an entsprechende Einrichtungen stellt. Hinzu kommt, dass die Last des Dieselmotors nicht wie beim Ottomotor durch eine Anpassung des Gesamtvolumens des Luft-Kraftstoff-Gemischs, sondern lediglich mittels Änderung der eingespritzten Kraftstoffmenge eingestellt wird. Durch eine Begrenzung der Kraftstoffzufuhr lässt sich im Falle gattungsgemäßer Dieselmotoren also lediglich eine geringfügige Beeinflussung der Partikelemission realisieren.

Der strengen gesetzlichen Limitierung derartiger Partikelemissionen begegnet der Stand der Technik daher mit Rußfiltern, welche nach der Zusammensetzung der zu filternden Teilchen auch als Rußpartikelfilter (RPF) oder nach deren Herkunft als Dieselrußpartikelfilter (DPF) bezeichnet werden und eine Reduzierung der im ausgestoßenen Abgasstrom verbleibenden Konzentration dieser Verbrennungsrückstände bezwecken. Der Reduzierung der Schadstoffemission dient auch ein Katalysator (Kat), der in Kombination mit einem Dieselmotor häufig den gebräuchlichen Wirkprinzipien eines sogenannten Oxidationskatalysators oder der selektiven katalytischen Reduktion (SCR) entspricht. Solche und andere Filter, Katalysatoren oder thermische Reaktoren umfassende Baugruppen seien in den folgenden Ausführungen unter dem Begriff der "Abgasbehandlungseinrichtung" zusammengefasst.

Neben weiteren strömungstechnischen Betriebsparametern kommt dabei vor allem dem sogenannten Druckverlust oder Druckabfall der unterschiedlichen Abgasbehandlungselemente besonderes Augenmerk zu. Im Falle gattungsgemäßer Filter ergibt sich eine derartige Druckdifferenz bereits aus der - durch Bauart und Werkstoff bedingten - inhärenten Widerstandszahl des Filterkörpers in seinem ursprünglichen Zustand. Im laufenden Betrieb der Abgasbehandlungseinrichtung erhöht die fortwährende Ein- und Anlagerung der aus dem Abgasstrom abgeschiedenen Feststoffe, beispielsweise in Form eines sogenannten Filterkuchens, den Strömungswiderstand jedoch oftmals beträchtlich, sodass auch der durch das Filter ausgeübte Gegendruck stetig ansteigt. Der steigende Gegendruck führt seinerseits zu einer stetigen Abnahme des Volumenstroms durch die Gesamteinrichtung.

DE102009014435A1 offenbart eine Abgasbehandlungseinrichtung mit einem in einem Aufnahmerohr stromaufwärts des Partikelfilters angeordneten Oxidationskatalysator.

Der Erfindung liegt daher die Aufgabe zugrunde, eine Abgasbehandlungseinrichtung zu schaffen, welche eine kontinuierliche Überwachung des durch ein Filter auf den Abgasstrom ausgeübten Gegendrucks erlaubt. Die Erfindung stellt sich darüber hinaus der Aufgabe, einen entsprechenden Verbrennungsmotor bereitzustellen.

Diese Aufgaben werden durch eine Einrichtung mit den Merkmalen des Anspruchs 1 und einen Verbrennungsmotor mit den Merkmalen des Anspruchs 16 gelöst.

Die Erfindung fußt demnach auf der grundlegenden Erkenntnis, dass eine zur Überwachung des Gegendrucks eines Dieselrußpartikelfilters geeignete Messstelle - entgegen der in Fachkreisen gängigen Meinung - nicht zwingend unmittelbar dem betreffenden Filter vorgelagert sein muss. Vielmehr ermöglicht das Design moderner Abgasbehandlungseinrichtungen, bei welchen das Dieselrußpartikelfilter von einem mit Ein- und Austrittsrohr strömungstechnisch verbundenen, im Wesentlichen gasdichten Innengehäuse aufgenommen wird, eine weitaus flexiblere Positionierung. Insofern erweist sich grundsätzlich nahezu jede im Bereich zwischen einem stromaufwärts des Filters angeordneten Oxidationskatalysator einerseits und einem stromabwärts des Filters angeordneten Verbindungselement andererseits gelegene Messstelle als geeignet, den genauen Gegendruck zu ermitteln. Zweckmäßig ist es, dass die Abgasbehandlungseinrichtung einen Ringraum radial zwischen dem Partikelfilter und dem Innengehäuse aufweist, der fluidisch mit einem Bereich axial zwischen dem Oxidationskatalysator und dem Partikelfilter verbunden ist, und die Gegendruckmessstelle an dem Ringraum angeordnet ist. Diese Ausgestaltung ermöglicht einen größeren Spielraum für die Anbringung der Gegendruckmessstelle, so dass sich daraus Vorteile bei der Ausnutzung des knappen zur Verfügung stehenden Bauraums ergeben.

In der vorstehenden Beschreibung und der Ansprüchen beziehen sich die Begriffe "axial" und "radial" auf den Partikelfilter, insbesondere auf die axiale und radiale Richtung eines rohrförmigen Mantels des Partikelfilters.
Zu denken ist dabei prinzipiell an eine beliebige Lage am Umfang des Innengehäuses. Dem Fachmann erschließt sich so eine Vielzahl konstruktiver Gestaltungsvarianten, aus welchen er die unter fertigungspraktischen und anwendungsspezifischen Gesichtspunkten vorteilhafteste Gegendruckmessstelle auswählen kann.

Eine günstige Alternative sieht vor, dass der Ringraum sich axial von dem Verbindungselement bis zu einer Eintrittsseite des Partikelfilters erstreckt. Somit kann die Anbringung der Gegendruckmessstellen an dem Ringraum besonders günstig die Vorteile der Erfindung ausnutzen.

In einer bevorzugten Ausführungsform ist die Gegendruckmessstelle in Gestalt einer stirnseitig am Innengehäuse anliegenden Buchse ausgeführt, deren Formgebung die passgenaue Aufnahme eines gattungsgemäßen Druckmessgeräts gestattet. Die Ausgestaltung einer derartigen Buchse als Gewindebuchse mit einem geeigneten Schraubgewinde erlaubt es in diesem Szenario, die durch einen Monteur beim Einschrauben des Messgeräts aufzuwendende moderate Umfangskraft solchermaßen zu einer beträchtlichen Axialkraft zu verstärken, dass Buchse und Messgerät eine form- und kraftschlüssige Verbindung eingehen können, welche auf entsprechende Weise bei Bedarf ebenso wieder gelöst werden kann. Die resultierende Umwandlung einer vergleichsweise großen Umfangsbewegung zu einer lediglich geringen Axialbewegung ermöglicht dem Monteur darüber hinaus eine unkomplizierte Justierung der Gegendruckmesseinrichtung innerhalb ihrer Buchse.

Erfindungsgemäß ist vorgesehen, dass das Innengehäuse an der Gegendruckmessstelle eine Öffnung aufweist und dass die Öffnung in einer den Ringraum begrenzenden Wand des Innengehäuses angeordnet ist. Somit kann die Gegendruckmessstelle den Druck in dem Ringraum erfassen, der durch den Druck in dem Bereich zwischen dem Oxidationskatalysator und dem Partikelfilter bestimmt ist. Folglich kann mit der Gegendruckmessstelle der durch den Partikelfilter verursachte Gegendruck gemessen werden.

Die erfindungsgemäß vorgesehene Gegendruckmessstelle schließt die bauliche Option eines zusätzlichen Außengehäuses der Abgasbehandlungseinrichtung dabei keinesfalls aus. Vielmehr ist es ohne nennenswerten konstruktiven Mehraufwand möglich, ein derartiges Außengehäuse - auch im Falle dessen doppelwandiger Ausgestaltung - mittels der beschriebenen (Gewinde-)Buchse zu durchziehen.

Auch die mögliche Wärmedämmung der Abgasbehandlungseinrichtung mithilfe einer zwischen Außen- und Innenschale des Außengehäuses eingeschlossenen Isolationsmatte steht dem vorgeschlagenen Ansatz nicht entgegen. In einer solchen Variante durchzieht die erfindungsgemäße Buchse die äußeren und inneren Gehäuseschalen mitsamt dem dazwischen eingeschlossenen Dämmmaterial, ohne den Rahmen der Erfindung zu verlassen. Eine senkrechte Ausrichtung der Buchse zur Wandung des Außengehäuses erweist sich in dieser Ausführungsvariante als besonders vorteilhaft, um die Dämmeigenschaften nicht zu beeinträchtigen.

Andere bauliche Ergänzungen der Abgasbehandlungseinrichtung mögen etwa dazu dienen, die angestrebte Emissionsminderung im Hinblick auf den gerade bei Dieselmotoren problematischen Stickoxidausstoß - im Vergleich zu einer reinen Rußpartikelfilterung oder aber der Verwendung eines StickoxidSpeicherkatalysators - unter Beibehaltung verbrauchsgünstiger Verbrennungsverhältnisse im Wege der selektiven katalytischen Reduktion (SCR) weiter zu erhöhen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: den prinzipiellen Aufbau der Abgasbehandlungseinrichtung eines erfindungsgemäßen Verbrennungsmotors in einer Querschnittsdarstellung,
- Fig. 2: einen Schnitt der Abgasbehandlungseinrichtung in der Ebene A-A der Figur 1,
- Fig. 3: einen Schnitt der Abgasbehandlungseinrichtung in der Ebene B-B der Figur 1 und
- Fig. 4: einen Schnitt der Abgasbehandlungseinrichtung in der Ebene U-U der Figur 3

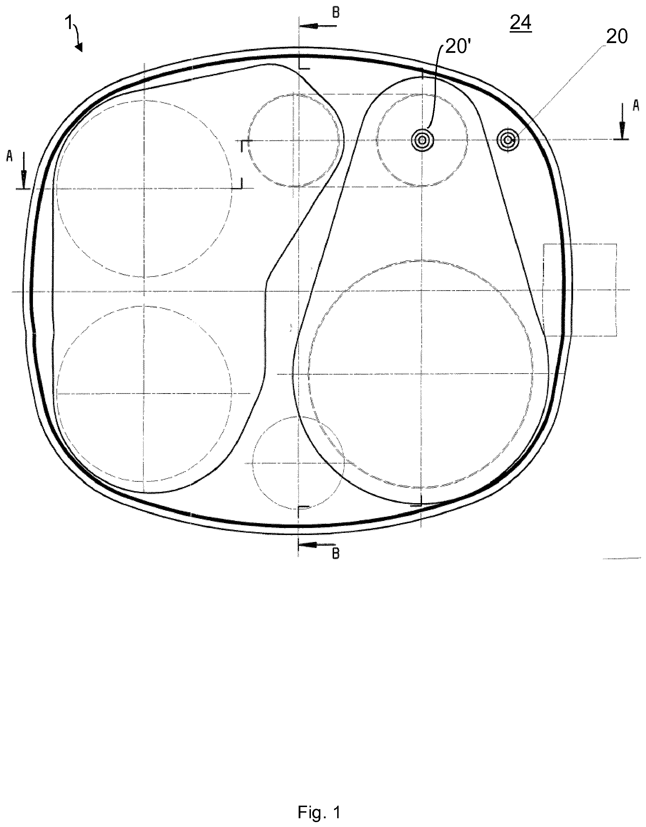

Die Figuren 1 bis 4 illustrieren, ausgehend von der Querschnittsdarstellung der Figur 1, den prinzipiellen Aufbau einer erfindungsgemäßen Abgasbehandlungseinrichtung 1 als Teil eines Verbrennungsmotors 24 in der Bauart des gebräuchlichen Dieselmotors. Zur Senkung seiner Stickoxidemissionen bedient sich der Verbrennungsmotor 24 einer selektiven katalytischen Reduktion und umfasst zu diesem Zweck eine konzentrisch zur Abgasströmung angeordnete Reduktionsmitteldüse 20, welche eine wässrige, etwa DIN 70070 entsprechende Harnstofflösung in zerstäubter Form in den das Innere der Abgasbehandlungseinrichtung 1 durchziehenden Abgasstrang des Verbrennungsmotors 24 einspeist. Figur 1 lässt dabei eine alternative Positionierung für eine exzentrisch zur Abgasströmung angeordnete Reduktionsmitteldüse 20' erkennen, die in ihrem Wirkprinzip jedoch ebenfalls den obigen Ausführungen entspricht.

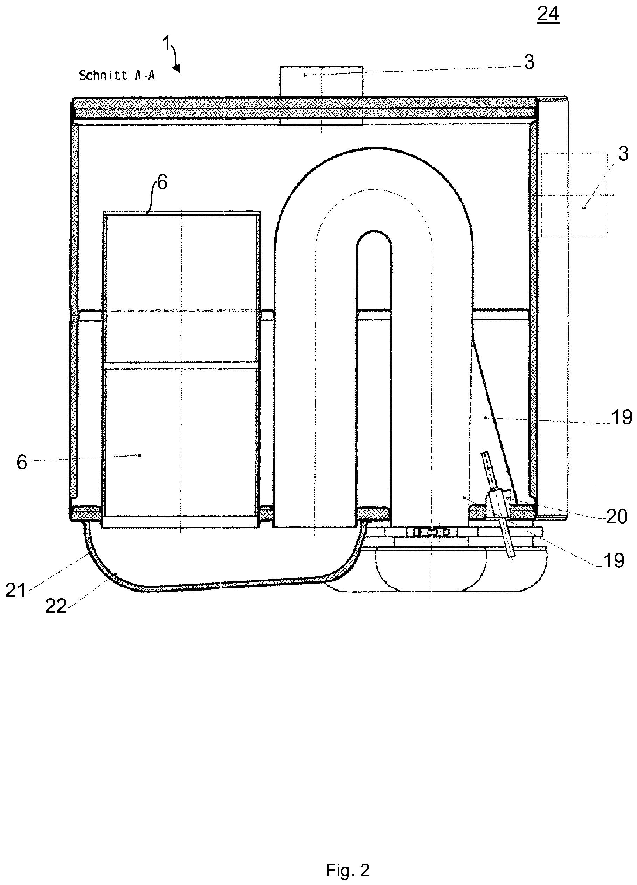

Deutlicher wird dieses Wirkprinzip anhand des in Figur 2 wiedergegebenen Schnittes in der Ebene A-A der Figur 1. Erkennbar ist insbesondere die Mündungslage der Reduktionsmitteldüse 20 in ein U-förmiges Mischrohr 19 der Abgasbehandlungseinrichtung 1, in welchem die aus Verbrennungsabgas und eingespritzter Harnstofflösung gebildete Dispersion im Wege einer Hydrolyse Kohlenstoffdioxid (CO₂) und Ammoniak (NH₃) bildet. Das mit dem als Reduktionsmittel fungierenden Ammoniak vermischte Verbrennungsabgas tritt sodann über einen innerhalb einer Kappe 21 gebildeten Einströmtrichter 22 in einen SCR-Katalysator 6 ein, der es bei entsprechender Betriebstemperatur der eigentlichen Redoxreaktion unterwirft, bevor es über ein Austrittsrohr 3 die Abgasbehandlungseinrichtung 1 verlässt.

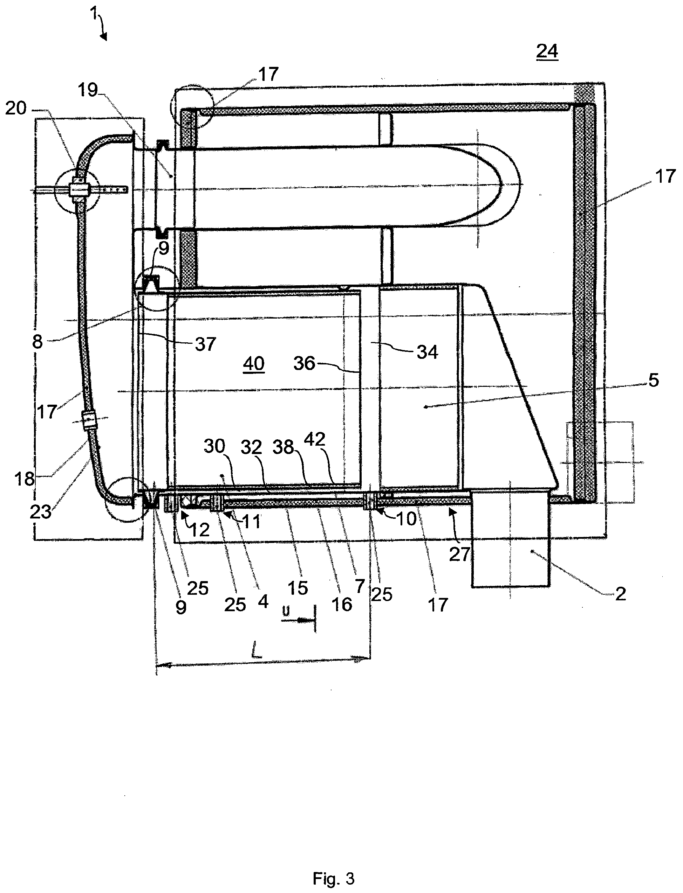

Als erfindungswesentlich erweist sich indes der Aufbau der Abgasbehandlungseinrichtung 1 in der Ebene B-B der Figur 1, der im Folgenden anhand der Schnittdarstellung gemäß Figur 3 erläutert sei. Den strömungstechnischen Ausgangspunkt dieser Anordnung bildet dabei das durch ein Außengehäuse 27 in die Abgasbehandlungseinrichtung 1 mündende hohlzylindrische Eintrittsrohr 2, welches das unter hoher Temperatur aus dem (hier nicht dargestellten) Brennraum des Verbrennungsmotors 24 in die Abgasbehandlungseinrichtung 1 strömende Verbrennungsabgas zunächst einem - rechtwinklig zum Eintrittsrohr 2 und somit im Wesentlichen entlang des Außengehäuses 27 verlaufenden - konventionellen Oxidationskatalysator 5 zuführt. Das mit vermindertem Kohlenwasserstoff- (CₘHₙ-) und Kohlenmonoxid-Anteil aus dem Oxidationskatalysator 5 austretende Verbrennungsabgas tritt sodann in ein stromabwärts und in Verlängerung des Oxidationskatalysators 5 angeordnetes Partikelfilter 4 über, an welchem sich die vom Abgasstrom mitgerissenen Rußpartikel anlagern können. Das insoweit behandelte Verbrennungsabgas durchströmt schließlich die in einer stirnseitigen Abdeckung 18 der Abgasbehandlungseinrichtung 1 gebildete Umlenkkammer 23, welche das Gas in einem U-förmigen Strömungsverlauf zurück ins Innere der Einrichtung 1 führt.

Um das Partikelfilter 4 vereinfacht auswechseln zu können, ist es mit einem Mantel 38 ausgestattet, der rohrförmig ausgebildet ist und der zumindest ein Partikelfilterelement 40 aufnimmt. Das Partikelfilterelement 40 ist dabei in üblicher Weise mittels einer Lagermatte 42 umhüllt und damit in dem Mantel 38 lagepositioniert. Die Stirnseiten des Partikelfilters 4 bilden eine Eintrittsseite 36 und eine Austrittsseite 37, durch welche die Verbrennungsabgase in das Partikelfilter 4 ein bzw. ausströmen können.

Das Partikelfilter 4 weist ferner ein an dem Mantel 38 umlaufend angeordnetes Verbindungselement 9 zur Verbindung des Partikelfilters 4 mit dem Innengehäuse 7 auf. Das Verbindungselement 9 ist an einem der Austrittsseite 37 zugewandten Verbindungsbereich 8 des Partikelfilters 4 angeordnet, so dass sich ein Großteil des Partikelfilters 4 berührungslos innerhalb des Innengehäuses 7 erstreckt.

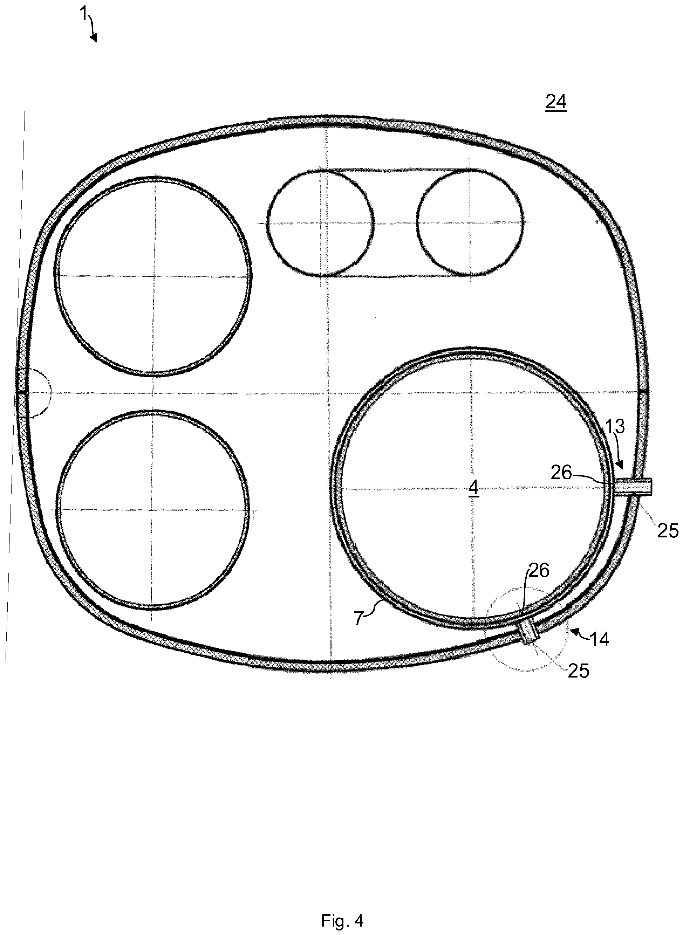

In dieser in Figur 3 gezeigten Schnittebene B-B sowie in der in Figur 4 gezeigten, zu den Ebenen A-A und B-B jeweils orthogonal verlaufenden Schnittebene U-U sind fünf optionale Gegendruckmessstellen 10, 11, 12 (Figur 3) sowie 13, 14 (Figur 4) bezeichnet, die vorzugsweise alternativ vorgesehen sind und als kennzeichnendes Merkmal der Erfindung betrachtet werden mögen. Das Augenmerk sei hierbei zunächst auf die Grundposition der ersten Gegendruckmessstelle 10 der Figur 3 gelenkt, welche der gängigen Anschauung entspricht, wonach eine Gegendruckmessung zwingend unmittelbar stromaufwärts des betreffenden Partikelfilters 4 erfolgen müsse. Diese Annahme trifft nicht zu.

Im Gegenteil belegen bereits die gemäß Figur 3 markierten, als alternativ zu verstehenden zweiten und dritten Gegendruckmessstellen 11, 12, dass sich eine Gegendruckmessung entlang der gesamten Maximallänge L eines vollständig in das Innengehäuse 7 eingeschobenen, mit diesem - mittels des der Umlenkkammer 23 zugewandten Verbindungselements 9 - verbundenen Partikelfilters 4 als möglich und praktikabel erweist. Nicht nur - wie im Falle der zweiten Gegendruckmessstelle 11 - längs des eingeschobenen Partikelfilters 4 ist demnach eine solche Gegendruckmessung realisierbar. Vielmehr kann ohne Inkaufnahme größerer Messabweichungen eine dritte Gegendruckmessstelle 12 selbst axial zwischen dem in Form einer sogenannten V-Schelle ausgeführten Verbindungselement 9 und einem Außengehäuse 27vorgesehen sein, in das das Innengehäuse 7 eingesetzt ist.

Auch in Umfangsrichtung des Innengehäuses 7 eröffnet sich dem Fachmann eine Vielzahl denkbarer Gegendruckmessstellen, wie Figur 4 anhand einer vierten Gegendruckmessstelle 13 sowie einer fünften Gegendruckmessstelle 14 anschaulich aufzeigt. Eine jeder dieser Gegendruckmessstellen 10, 11, 12, 13, 14 kann sich anwendungsabhängig als geeignet erweisen, ein gattungsgemäßes Druckmessgerät oder Manometer aufzunehmen, das sich zur Lagesicherung und Montageerleichterung etwa in eine an der gewählten Gegendruckmessstelle gelegene Buchse 25 in Gestalt einer Gewindebuchse eingeschraubt werden kann. Das Innengehäuse 7 weist zu diesem Zweck in Verlängerung der Buchse 25 an der vorgesehenen Gegendruckmessstelle 10 - 14 eine Öffnung 26 (vgl. Fig. 4) auf. Die Buchse 25 ist axial beidseitig offen. Das außerhalb des Innengehäuses 7 angeordnete Außengehäuse 27 kann doppelwandig ausgestaltet sein und wird ggf. mitsamt seiner Außenschale 15, darin angeordneten Innenschale 16 sowie seiner fluiddicht zwischen Außenschale 15 und Innenschale 16 eingeschlossenen Isolationsmatte 17 im Falle der ersten Gegendruckmessstelle 10 und der zweiten Gegendruckmessstelle 11 von dieser Buchse 25 gleichfalls durchzogen.

Erfindungsgemäß ist die Gegendruckmessstelle 11 bis 14 an einer Position angeordnet, die sich von der aus dem Stand der Technik bekannten Lösung (siehe Gegendruckmessstelle 10) unterscheidet. Auf diese Weise kann die Gegendruckmessstelle 11 bis 14 variabler angeordnet werden, wodurch die Abgasbehandlungseinrichtung 1 an den vorhandenen Bauraum besser angepasst werden kann.

Die Gegendruckmessstellen 11 bis 14 haben gemeinsam, dass sie an einem Ringraum 30 angeordnet sind, der radial zwischen dem Partikelfilter 4 und dem Innengehäuse 7 gebildet ist. Erfindungsgemäß ist der Ringraum 30 radial zwischen dem Mantel 38 des Partikelfilters 4 und einer Wand 32 des Innengehäuses 7 gebildet. Ferner sind die Gegendruckmessstellen 11 bis 14 an einer Öffnung 26 in der Wand 32 des Innengehäuses 7 angeordnet, so dass die Gegendruckmessstellen 11 bis 14 den Druck in dem Ringraum 30 messen können.

Der Ringraum 30 erstreckt sich radial zwischen dem Innengehäuse 7 und dem Partikelfilter 4 und axial von dem Verbindungselement 9 bis zu einem Bereich 34, der sich axial zwischen dem Oxidationskatalysator 5 und dem Partikelfilter 4 erstreckt. Insbesondere erstreckt sich der Ringraum 30 axial bis zu einer Eintrittsseite 36 des Partikelfilters 4.

Da der Ringraum 30 an der Eintrittsseite 36 des Partikelfilters 4 in den Bereich 34 übergeht, liegt in dem Ringraum 30 im Wesentlichen der selbe Druck an wie im Bereich 34 axial zwischen dem Oxidationskatalysator 5 und dem Partikelfilter 4. Somit messen die Gegendruckmessstellen 11 bis 14 ohne maßgebliche Abweichung den durch den Partikelfilter 4 verursachten Gegendruck.

In der vorstehenden Beschreibung und der Ansprüchen beziehen sich die Begriffe "axial" und "radial" auf den Partikelfilter 4, insbesondere auf die axiale und radiale Richtung des rohrförmigen Mantels 38 des Partikelfilters 4.

## Patentansprüche

1. Abgasbehandlungseinrichtung (1) mit
- einem Eintrittsrohr (2) zum Einleiten eines Verbrennungsabgases,
- einem Austrittsrohr (3) zum Ausleiten des Verbrennungsabgases,
- einem einerseits mit dem Eintrittsrohr (2) und andererseits mit dem Austrittsrohr (3) strömungstechnisch verbundenen, im Wesentlichen gasdichten Innengehäuse (7) zum Aufnehmen eines Partikelfilters (4), wobei das Partikelfilter (4) mit einem rohrförmigen Mantel (38) ausgestattet ist, der zumindest ein Partikelfilterelement (40) aufnimmt, das mittels einer Lagermatte (42) umhüllt und damit im Mantel (38) lagepositioniert ist,
- einem in einem strömungstechnisch dem Austrittsrohr (3) zugewandten Verbindungsbereich (8) des Innengehäuses (7) angeordneten Verbindungselement (9) zum mechanischen Verbinden des Partikelfilters (4) mit dem Innengehäuse (7) und
- einem stromaufwärts des Partikelfilters (4) in dem Innengehäuse (7) angeordneten Oxidationskatalysator (5) zum Katalysieren einer Oxidationsreaktion des Verbrennungsabgases,
- wenigstens eine strömungstechnisch zwischen dem Oxidationskatalysator (5) und dem Verbindungselement (9) vorgesehene Gegendruckmessstelle (11, 12, 13, 14) zum Messen eines im Betrieb der Abgasbehandlungseinrichtung (1) durch das Partikelfilter (4) ausgeübten Gegendrucks,
- wobei die Abgasbehandlungseinrichtung (1) einen Ringraum (30) radial zwischen dem Partikelfilter (4) und dem Innengehäuse (7) aufweist, der fluidisch mit einem Bereich (34) axial zwischen dem Oxidationskatalysator (5) und dem Partikelfilter (4) verbunden ist, und die Gegendruckmessstelle (11, 12, 13, 14) an dem Ringraum (34) angeordnet ist,
- wobei der Ringraum (30) radial zwischen dem Mantel (38) des Partikelfilters (4) und einer Wand (32) des Innengehäuses (7) gebildet ist,
- wobei die Gegendruckmessstelle (11, 12, 13, 14) an einer Öffnung (26) in der den Ringraum (30) begrenzenden Wand (32) des Innengehäuses (7) angeordnet ist, so dass mittels der Gegendruckmessstelle (11, 12, 13, 14) der Druck in dem Ringraum (30) gemessen werden kann.

2. Abgasbehandlungseinrichtung nach Anspruch 1,
**dadurch gekennzeichnet, dass**
- der Ringraum (34) sich axial von dem Verbindungselement (9) bis zu einer Eintrittsseite (36) des Partikelfilters (4) erstreckt.

3. Abgasbehandlungseinrichtung nach Anspruch 1 oder 2,
**dadurch gekennzeichnet, dass**
die Gegendruckmessstelle (11 - 14) umfänglich an dem Innengehäuse (7) liegt.

4. Abgasbehandlungseinrichtung nach einem der Ansprüche 1 bis 3,
**dadurch gekennzeichnet, dass**
die Gegendruckmessstelle (11 - 14) eine stirnseitig an der Öffnung (26) anliegende Buchse (25) zum Aufnehmen eines Druckmessgeräts aufweist.

5. Abgasbehandlungseinrichtung nach Anspruch 4,
**dadurch gekennzeichnet, dass**
die Buchse (25) ein Schraubgewinde zum Einschrauben des Druckmessgeräts in die Buchse (25) umfasst.

6. Abgasbehandlungseinrichtung nach Anspruche 4 oder 5,
**gekennzeichnet durch**
- ein außerhalb des Innengehäuses (7) angeordnetes Außengehäuse (15, 16), wobei die Buchse (25) das Außengehäuse (15, 16) im Wesentlichen senkrecht durchzieht.

7. Abgasbehandlungseinrichtung nach Anspruch 6,
**gekennzeichnet durch**
- eine zwischen einer Außenschale (15) und einer innerhalb der Außenschale (15) angeordneten Innenschale (16) vorzugsweise fluiddicht in dem Außengehäuse (15, 16) eingeschlossene Isolationsmatte (17) zum thermischen Isolieren der Abgasbehandlungseinrichtung (1),
wobei die Buchse (25) die Außenschale (15), die Innenschale (16) und ferner die Isolationsmatte (17) durchzieht.

8. Abgasbehandlungseinrichtung nach einem der Ansprüche 1 bis 7,
**dadurch gekennzeichnet,**
- **dass** die Gegendruckmessstelle (11 - 14) axial zwischen dem Verbindungselement (9) und einem Außengehäuse (15, 16) angeordnet ist, welches das Innengehäuse (7) zumindest teilweise umgibt und aus dem das Innengehäuse (7) axial herausragt.

9. Abgasbehandlungseinrichtung nach einem der Ansprüche 1 bis 8,
**gekennzeichnet durch**
- ein mit dem Partikelfilter (4) strömungstechnisch verbundenes Mischrohr (19) zum Mischen des Verbrennungsabgases mit einem, vorzugsweise auf einer wässrigen Harnstofflösung basierenden ammoniakhaltigen, Reduktionsmittel,
- eine in das Mischrohr (19) mündende Reduktionsmitteldüse (20, 20') zum Zerstäuben des Reduktionsmittels und
- wenigstens einen einerseits mit dem Mischrohr (19) und andererseits mit dem Austrittsrohr (3) strömungstechnisch verbundenen SCR-Katalysator (6) zum Katalysieren einer Reduktionsreaktion des Verbrennungsabgases mittels des Reduktionsmittels.

10. Abgasbehandlungseinrichtung nach Anspruch 9,
**gekennzeichnet durch**
- eine lösbar mit dem Außengehäuse (15, 16) verbundene Kappe (21) zum Abdecken des SCR-Katalysators (6).

11. Abgasbehandlungseinrichtung nach Anspruch 10,
**gekennzeichnet durch**
- einen in der Kappe (21) ausgebildeten, einerseits mit dem Mischrohr (19) und andererseits mit dem SCR-Katalysator (6) strömungstechnisch verbundenen Einströmtrichter (22) zum Einleiten des mit dem Reduktionsmittel vermischten Verbrennungsabgases in den SCR-Katalysator (6).

12. Abgasbehandlungseinrichtung nach einem der Ansprüche 9 bis 11,
**gekennzeichnet durch**
- eine stromabwärts des Verbindungsbereichs (8) angeordnete lösbare Abdeckung (18) zum Abdecken des Innengehäuses (7).

13. Abgasbehandlungseinrichtung nach Anspruch 12,
**gekennzeichnet durch**
- eine in der Abdeckung (18) ausgebildete, einerseits mit dem Innengehäuse (7) und andererseits mit dem Mischrohr (19) strömungstechnisch verbundene Umlenkkammer (23) zum Umlenken des Verbrennungsabgases von dem Partikelfilter (4) in das Mischrohr (19).

14. Abgasbehandlungseinrichtung nach Anspruch 12 oder 13,
**dadurch gekennzeichnet, dass**
das Innengehäuse (7) länglich und so geformt ist, dass das Partikelfilter (4) über eine vorgegebene Maximallänge (L) in das Innengehäuse (7) eingeschoben und mit diesem mittels des Verbindungselements (9) verbunden werden kann, wenn die Abdeckung (18) gelöst ist.

15. Abgasbehandlungseinrichtung nach einem der Ansprüche 1 bis 14,
**dadurch gekennzeichnet, dass**
das Verbindungselement (9) eine lösbare, vorzugsweise V-förmig profilierte Schelle zum Befestigen des Partikelfilters (4) in dem Innengehäuse (7) umfasst.

16. Verbrennungsmotor (24), insbesondere Dieselmotor, mit
- mindestens einem Brennraum zum Verbrennen eines Brennstoffs unter Ausstoß eines Verbrennungsabgases,
**gekennzeichnet durch**
- eine mit dem Brennraum strömungstechnisch verbundene Abgasbehandlungseinrichtung (1) nach einem der Ansprüche 1 bis 15 zum Behandeln des Verbrennungsabgases.

## Claims

1. An exhaust gas treatment device (1), having
- an inlet pipe (2) for introducing a combustion waste gas,
- an outlet pipe (3) for discharging the combustion waste gas,
- a substantially gas-tight inner housing (7), which is flow-connected to the inlet pipe (2) on one side and to the outlet pipe (3) on the other side, for accommodating a particulate filter (4), wherein the particulate filter (4) is equipped with a tubular casing (38) which accommodates at least one particle filter element (40) which is encased by means of a bearing mat (42) and is therewith positioned in the casing (38),
- a connection element (9), which is arranged in a connection region (8) of the inner housing (7) that faces the outlet pipe (3) in terms of flow, for mechanically connecting the particulate filter (4) to the inner housing (7), and
- an oxidation catalyst (5), which is arranged upstream of the particulate filter (4) in the inner housing (7), for catalysis of an oxidation reaction of the combustion waste gas,
- at least one counterpressure measurement point (11, 12, 13, 14), which is provided between the oxidation catalyst (5) and the connection element (9) in terms of flow, for measuring a counterpressure exerted by the particulate filter (4) during operation of the exhaust gas treatment device (1),
- wherein the exhaust gas treatment device (1) has an annular space (30) radially between the particulate filter (4) and the inner housing (7), which is fluid-connected to a region (34) axially between the oxidation catalyst (5) and the particulate filter (4), and the counterpressure measurement point (11, 12, 13, 14) is arranged in the annular space (30),
- wherein the annular space (30) is formed radially between the casing (38) of the particulate filter (4) and a wall (32) of the inner housing (7),
- wherein the counterpressure measuring point (11, 12, 13, 14) being arranged at an opening (26) in the wall (32) of the inner housing (7) delimiting the annular space (30), so that the pressure in the annular space (30) can be measured with the back-pressure measuring point (11, 12, 13, 14).

2. The exhaust gas treatment device according to claim 1,
**characterised in that**
the annular space (30) extends axially from the connecting element (9) to an inlet side (36) of the particulate filter (4).

3. The exhaust gas treatment device according to claim 1 or 2,
**characterised in that**
the counterpressure measurement point (11 - 14) lies circumferentially on the inner housing (7).

4. The exhaust gas treatment device according to any one of claims 1 to 3,
**characterised in that**
the counterpressure measurement point (11 - 14) has a bushing (25) bearing against the end side of the opening (26) for accommodating a pressure measurement unit.

5. The exhaust gas treatment device according to claim 4,
**characterised in that**
the bushing (25) comprises a screw thread for screwing the pressure measurement unit into the bushing (25).

6. The exhaust gas treatment device according to claim 4 or 5,
**characterised by**
- an outer housing (27) arranged outside the inner housing (7),
wherein the bushing (25) penetrates the outer housing (27) substantially perpendicularly.

7. The exhaust gas treatment device according to claim 6,
**characterised by**
- an insulation mat (17), which is enclosed in the outer housing (27) preferably in a fluid-tight manner between an outer shell (15) and an inner shell (16) arranged inside the outer shell (15), for thermally insulating the exhaust gas treatment device (1),
wherein the bushing (25) penetrates the outer shell (15), the inner shell (16) also the insulation mat (17).

8. The exhaust gas treatment device according to any one of claims 1 to 7,
**characterised in that**
the counterpressure measurement point (11 - 14) is arranged axially between the connection element (9) and an outer housing (27), which at least partially surrounds the inner housing (7) and out of which the inner housing (7) axially projects.

9. The exhaust gas treatment device according to any one of claims 1 to 8,
**characterised by**
- a mixing pipe (19), which is flow-connected to the particulate filter (4), for mixing the combustion waste gas with an ammonia-containing reduction agent, preferably based on an aqueous urea solution,
- a reduction agent nozzle (20, 20'), which opens into the mixing pipe (19), for atomising the reduction agent, and
- at least one SCR catalyst (6), which is flow-connected to the mixing pipe (19) on one side and to the outlet pipe (3) on the other side, for catalysis of a reduction reaction of the combustion waste gas by means of the reduction agent.

10. The exhaust gas treatment device according to claim 9,
**characterised by**
- a cap (21), which is connected detachably to the outer housing (27), for covering the SCR catalyst (6).

11. The exhaust gas treatment device according to claim 10,
**characterised by**
- an inflow funnel (22), which is formed in the cap (21) and is flow-connected to the mixing pipe (19) on one side and to the SCR catalyst (6) on the other side, for introducing the combustion waste gas mixed with the reduction agent into the SCR catalyst (6).

12. The exhaust gas treatment device according to any one of claims 9 to 11,
**characterised by**
- a detachable cover (18), which is arranged downstream of the connection region (8), for covering the inner housing (7).

13. The exhaust gas treatment device according to claim 12,
**characterised by**
- a deflection chamber (23), which is formed in the cover (18) and is flow-connected to the inner housing (7) on one side and to the mixing pipe (19) on the other side, for deflecting the combustion waste gas from the particulate filter (4) into the mixing pipe (19).

14. The exhaust gas treatment device according to claim 12 or 13,
**characterised in that**
the inner housing (7) is elongate and shaped in such a manner that the particulate filter (4) can be pushed over a predefined maximum length (L) into the inner housing (7) and connected to the latter by means of the connection element (9) when the cover (18) is detached.

15. The exhaust gas treatment device according to any one of claims 1 to 14,
**characterised in that**
the connection element (9) comprises a detachable clamp, which is preferably profiled in a V-shaped manner, for fastening the particulate filter (4) in the inner housing (7).

16. An internal combustion engine (24), in particular diesel engine, having
- at least one combustion chamber for the combustion of a fuel with the emission of a combustion waste gas,
**characterised by**
- an exhaust gas treatment device (1) according to any one of claims 1 to 15, which is flow-connected to the combustion chamber, for treating the combustion waste gas.

## Revendications

1. Dispositif de traitement de gaz d'échappement (1) comprenant
- un tube d'admission (2) pour introduire les gaz d'échappement de combustion,
- un tube de décharge (3) pour décharger les gaz d'échappement de combustion,
- un boîtier interne (7) sensiblement étanche aux gaz, raccordé en technique de fluides, d'une part, au tube d'admission (2) et, d'autre part, au tube de décharge (3) pour recevoir un filtre à particules (4), le filtre à particules (4) est équipé d'une enveloppe tubulaire (38) qui accueille au moins un élément filtrant à particules (40) qui est encastré et est positionné dans l'enveloppe (38) au moyen d'un matelas de support (42),
- un élément de raccordement (9) agencé dans une zone de raccordement (8) du boîtier interne (7) affecté en technique des fluides au tube de décharge (3) pour raccorder mécaniquement le filtre à particules (4) au boîtier interne (7) et
- un catalyseur d'oxydation (5) agencé en amont du filtre à particules (4) dans le boîtier interne (7) pour catalyser une réaction d'oxydation des gaz d'échappement de combustion,
- au moins un point de mesure de contrepression (11, 12, 13, 14) prévu en technique des fluides entre le catalyseur d'oxydation (5) et l'élément de raccordement (9) pour mesurer une contrepression exercée par le filtre à particules (4) lors du fonctionnement du dispositif de traitement de gaz d'échappement (1),
- dans lequel le dispositif de traitement de gaz d'échappement (1) présente un espace annulaire (30) radialement entre le filtre à particules (4) et le boîtier interne (7), qui est relié en mode fluidique à une zone (34) axialement entre le catalyseur d'oxydation (5) et le filtre à particules (4), et le point de mesure de contrepression (11, 12, 13, 14) est agencé dans l'espace annulaire (30),
- dans lequel l'espace annulaire (30) est formé radialement entre l'enveloppe (38) du filtre à particules (4) et une paroi (32) du boîtier interne (7),
- dans lequel le point de mesure de la contrepression (11, 12, 13, 14) est disposé au niveau d'une ouverture (26) dans la paroi (32) du boîtier intérieur (7) délimitant l'espace annulaire (30), de sorte que la pression dans l'espace annulaire (30) peut être mesurée avec le point de mesure de la contrepression (11, 12, 13, 14).

2. Dispositif de traitement de gaz d'échappement selon la revendication 1,
**caractérisé en ce que**,
l'espace annulaire (30) s'étend axialement de l'élément de raccordement (9) à un côté d'admission (36) du filtre à particules (4).

3. Dispositif de traitement de gaz d'échappement selon la revendication 1 ou 2,
**caractérisé en ce que**,
le point de mesure de contrepression (11-14) se situe sur la périphérie dans le boîtier interne (7).

4. Dispositif de traitement de gaz d'échappement selon l'une quelconque des revendications 1 à 3,
**caractérisé en ce que**,
le point de mesure de contrepression (11-14) présente une douille (25) appliquée à l'avant sur l'ouverture (26) pour recevoir un appareil de mesure de pression.

5. Dispositif de traitement de gaz d'échappement selon la revendication 4,
**caractérisé en ce que**,
la douille (25) comprend un filet de vis pour visser l'appareil de mesure de pression dans la douille (25).

6. Dispositif de traitement de gaz d'échappement selon la revendication 4 ou 5,
**caractérisé par**
- un boîtier externe (27) agencé à l'extérieur du boîtier interne (7), dans lequel la douille (25) traverse le boîtier externe (27) de manière sensiblement perpendiculaire.

7. Dispositif de traitement de gaz d'échappement selon la revendication 6,
**caractérisé par**
- un mat isolant (17) enserré de préférence de manière étanche aux fluides dans le boîtier externe (27) entre une coque externe (15) et une coque interne (16) à l'intérieur de la coque externe (15) pour isoler thermiquement le dispositif de traitement de gaz d'échappement (1),
dans lequel la douille (25) traverse la coque externe (15), la coque interne (16) et en outre le mat isolant (17).

8. Dispositif de traitement de gaz d'échappement selon l'une quelconque des revendications 1 à 7,
**caractérisé en ce que**,
le point de mesure de contrepression (11-14) est agencé axialement entre l'élément de raccordement (9) et un boîtier externe (27), qui entoure au moins en partie le boîtier interne (7) et dont le boîtier interne (7) fait saillie axialement.

9. Dispositif de traitement de gaz d'échappement selon l'une quelconque des revendications 1 à 8,
**caractérisé par**
- un tube de mélange (19) raccordé en technique des fluides au filtre à particules (4) pour mélanger les gaz d'échappement de combustion à un agent de réduction contenant de l'ammoniac de préférence à base d'une solution aqueuse d'urée,
- une buse d'agent de réduction (20, 20') débouchant dans le tube de mélange (19) pour pulvériser l'agent de réduction et
- au moins un catalyseur SCR (6) raccordé en technique des fluides, d'une part, au tube de mélange (19) et, d'autre part, au tube de décharge (3) pour catalyser une réaction de réduction des gaz d'échappement de combustion au moyen de l'agent de réduction.

10. Dispositif de traitement de gaz d'échappement selon la revendication 9,
**caractérisé par**
- une coiffe (21) raccordée de manière amovible au boîtier externe (27) pour recouvrir le catalyseur SCR (6).

11. Dispositif de traitement de gaz d'échappement selon la revendication 10,
**caractérisé par**
- un entonnoir d'admission (22) conçu dans la coiffe (21) et raccordé en technique des fluides, d'une part, au tube de mélange (19) et, d'autre part, au catalyseur SCR (6) pour introduire les gaz d'échappement de combustion mélangés à l'agent de réduction dans le catalyseur SCR (6).

12. Dispositif de traitement de gaz d'échappement selon l'une quelconque des revendications 9 à 11,
**caractérisé par**
- un recouvrement amovible (18) agencé en aval de la zone de raccordement (8) afin de recouvrir le boîtier interne (7).

13. Dispositif de traitement de gaz d'échappement selon la revendication 12,
**caractérisé par**
- une chambre de renvoi (23) conçu dans le recouvrement (18) et raccordé en technique des fluides, d'une part, au boîtier interne (7) et, d'autre part, au tube de mélange (19) pour renvoyer les gaz d'échappement de combustion du filtre à particules (4) dans le tube de mélange (19).

14. Dispositif de traitement de gaz d'échappement selon la revendication 12 ou 13,
**caractérisé en ce que**
le boîtier interne (7) est conformé longitudinalement, et de sorte que le filtre à particules (4) puisse être inséré sur une longueur maximale prédéfinie (L) dans le boîtier interne (7) et raccordé à celui-ci au moyen de l'élément de raccordement (9) lorsque le recouvrement (18) est retiré.

15. Dispositif de traitement de gaz d'échappement selon l'une quelconque des revendications 1 à 14,
**caractérisé en ce que**,
l'élément de raccordement (9) comprend une bride amovible de préférence profilée en forme de V pour fixer le filtre à particules (4) dans le boîtier interne (7).

16. Moteur à combustion (24), en particulier moteur diesel, comprenant
- au moins un espace de combustion pour la combustion d'un combustible en expulsant des gaz d'échappement de combustion,
**caractérisé par**
- un dispositif de traitement de gaz d'échappement (1) raccordé à l'espace de combustion en technique des fluides selon l'une quelconque des revendications 1 à 15 pour traiter les gaz d'échappement de combustion.
